# EUROPEAN PATENT APPLICATION

(11) **EP 4 190 547 A1**
(43) Date of publication of application: **07.06.2023**
(21) Application number: 22210184.2
(22) Date of filing: 29.11.2022
(51) Int. Cl.: B31B 70/86, B31B 50/86

(54) **HANDLE APPLICATOR FOR APPLYING HANDLES TO LYING PACKAGES**

(30) Priority: 03.12.2021 IT 202100030683
(71) Applicant: La Scala, Massimiliano Francesco, 20832 Desio (Monza Brianza) (IT); Brianpack S.r.l., 20851 Lissone (Monza Brianza) (IT)
(72) Inventor: LA SCALA, Massimiliano Francesco, 20832 Desio (Monza Brianza) (IT)
(74) Representative: Lunati & Mazzoni S.r.L.

(57) **Abstract**

It is provided a handle applicator (1) for applying handles to packages comprising a frame (2) capable of being arranged adjacent to transport means (11) configured to convey in sequence packages (12) along a transport path (1a), an applicator (3) constrained in a compliant way to the frame (2) so as to be suspended cantilevered, in use, over the transport path (1a) and comprising a first hollow shaft (30) rotating about a rotation axis (3a), a support (31) integrally constrained to the first shaft (30) and extending transversally thereto, a plurality of rods (32) constrained in a compliant way to the support (31), each extending along its own extension axis (32a) parallel to the rotation axis (3a) spaced with respect to the first shaft (30) and each comprising gripping means (320) configured to hook a handle, dispensing means (4) configured to dispense handles one by one on a station (40), releasing means (5) configured to access the station (40) and to apply glue to each dispensed handle, wherein the applicator (3) further comprises a second shaft (33) housed at least partially within the first shaft (30) and rotating about the rotation axis (3a) independently of the first shaft (30), and transmission means (34) configured to transmit a rotation of the second shaft (33) to each rod (32) such that each rod (32) rotates around its extension axis (32a) relative to the support (31) proportional to the rotation of the second shaft (33).

## Description

The present invention relates to a handle applicator for applying handles to packaging of the type specified in the preamble to the first claim.

In particular, the present invention relates to a handle applicator equipped with a frame to which a handle applicator suspended on conveying means, e.g. comprising a conveyor belt, transporting packaging, is constrained.

As is well known, in the packaging production sector, the application of the handle to the lying packaging prior to folding is an essential step in the production of the finished packaging.

This application is generally carried out by a device called a handle applicator. The handle applicator is, therefore, placed close to a conveyor belt carrying a package laid at the handle applicator for the application of the handle with the help of a glue. During application, it is important to ensure that it is applied in the correct position and that the pressure received is such that stable adhesion is guaranteed.

The handle and the tape are usually part of a larger machine that folds and glues the lying packaging, including the handle, into a finished package.

In detail, the handle applicator comprises an applicator suspended above the conveyor belt of lying packaging, which usually receives a single handle to be applied from handling means of handles. The latter take the single handle from a loader or dispenser, where a stack of handles is stored.

In the document CA-A-1283319, for example, a handle application apparatus is described where the applicator is designed to work on moving substrates, i.e. on a conveyor belt. In this apparatus, the loader, the handle handling means and the applicator itself are placed on top of each other, located in a defined area above the conveyor belt, while the adhesive application means are placed directly on the conveyor belt upstream of the apparatus. This configuration just described is due to the nature of the handle handling means and the applicator, where the former are characterised by being basically a head capable of picking up a handle with a suction system, and rotating it towards the applicator, which in turn consists of a partially hollow cylinder, where the hollow part serves to house part of the handle until the rotation of the applicator crushes the handle itself with the full part on the packaging lying in motion on the conveyor belt.

The document WO-A-89/02362 describes an apparatus operating in the same technical field as described above, characterised by handle handling means comprising an arm which picks up the handle from the loader by bringing it into direct contact with a rotating applicator comprising a cylinder in rotation with arms equipped with suction systems which stop the handle on said applicator during its rotation; also in this invention, the glue is applied to the packaging laid in motion. Both of the solutions described above have well-defined drawbacks. In fact, in both cases it is necessary to have a pneumatic circuit connected to moving sections, be they the handling equipment or the handle applicator itself, implying complications in the manufacture of these components and making the overall structure of the machine less simple.

Considering in particular the equipment described in CA-A-1283319, an obvious drawback is the possibility of fouling the glue roller if the handling equipment causes an error in the positioning of the handle; this can therefore lead to considerable downtime and costs considering that these machines operate at around 10000 pieces produced per working hour.

With reference instead to the equipment described in WO-A-89/02362, it has the aforementioned complications of having a pressurised circuit connected to a rotating element, to which is added the fact that the handling means consist of a complex articulated arm that must pick up the handle from the loader and place it in position on a rotating element, i.e. the applicator, which must stop to allow this, again presenting downtime in the process.

A further problem with both technical solutions is that they are not easily movable, as they have complex equipment that works in combination with very tight dimensional tolerances, and above all, this equipment is not mounted on a single frame. For example, in the WO-A-89/02362 machine, the applicator and handling means are not connected to a rigid frame, and the glue application means are placed separately on the conveyor belt.

The patent application EP-A-3804973 describes a handle applicator comprising a rotating applicator having a central body and several rods with suction cups. The rods with suction cups, rotating integral with the body of the applicator, pick up the handles from a station and couple them to the moving packages on a conveyor belt. Preferably, the rods with suction cups rotate parallel to the rotation axis of the applicator body, but they also have the freedom to rotate on themselves to hold the suction cups in place; therefore, the machine described by EP-A-3804973 enables handles to be glued onto packaging that is spread continuously.

However, even the machine described by EP-A-3804973 includes major drawbacks.

In particular, the suction cup applicator is sometimes unable to pick up the handles correctly. Thus, it can happen that the handles are mistakenly dragged or dropped in the wrong areas of the conveyor belt.

Hence again the need to stop the machine and the possibility of the packaging thus produced having defects, which are sometimes not negligible, leading to the rejection of the finished product.

In this situation, the technical task at the basis of the present invention is to devise a handle applicator for applying handles to packaging that can substantially obviate at least some of the aforementioned drawbacks.

In the context of the said technical task, it is an important aim of the invention to obtain a handle machine which is specifically designed to perform easy and comfortable movements on any packaging transport line as it is equipped as a whole with all the necessary components for line operations

Another important aim of the invention is to realise a handle applicator whose applicator is structurally simple, quick and precise in applying handles to moving packaging and which, in particular, avoids losing control of the handles. Therefore, another task of the invention is to increase the efficiency of the machine and considerably reduce the possibility of defective finished packaging.

In conclusion, a further task of the invention is to realise a handle applicator which allows a plurality of handles to be applied continuously while the applicator is being moved in relation to the conveyor line.

The technical task and the specified purposes are achieved by handle applicator for applying handles to packages as claimed in the annexed claim 1.

Preferred technical solutions are highlighted in the dependent claims.

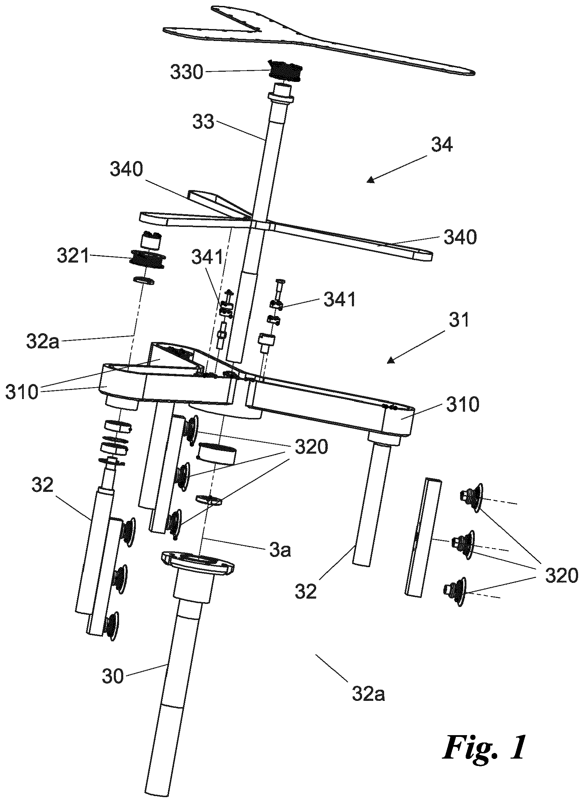

The features and advantages of the invention are clarified below by a detailed description of preferred embodiments of the invention, with reference to the accompanying drawings, in which
the **Fig. 1** shows an exploded view of a handle applicator for applying handles to packaging according to the invention;

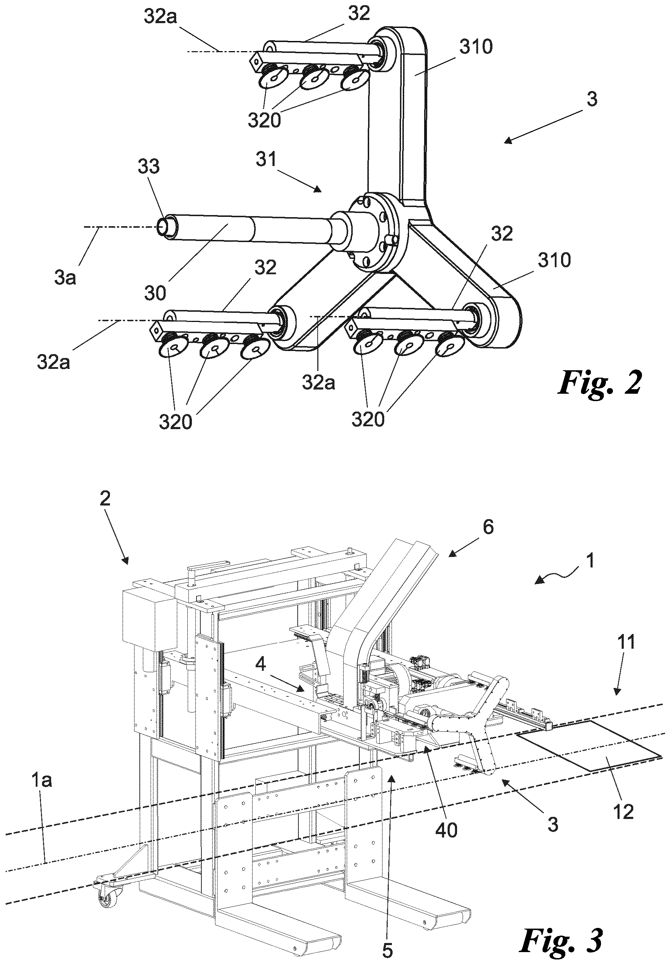

the **Fig. 2** illustrates a perspective view of a handle applicator for applying handles to packaging according to the invention; and
the **Fig. 3** is a perspective view of a handle applicator for applying handles to packaging according to the invention.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices. The measurements and data reported in this text are to be considered, unless otherwise indicated, as performed in the International Standard Atmosphere ICAO (ISO 2533:1975).

With reference to the Figures, the handle applicator for applying handles to packaging according to the invention is globally referred to as number **1.**

The handle applicator 1 is basically designed to allow a plurality of handles to be coupled onto respective packages laid out before the packages are assembled. Therefore, preferably, the handle applicator 1 is suitable for interacting with transport means **11.** The transport means 11 are basically configured to sequentially convey packages along a transport path **1a.**

The transport path 1a can be straight or curved.

The transport means 11 may therefore include, for example, a conveyor belt on which the packaging is placed. The latter, moreover, are preferably laid out and suitable for subsequent assembly and folding to make finished packaging.

In particular, the handle applicator 1 includes a frame **2.**

The frame 2 is essentially a support structure configured to support the components of handle applicator 1. Therefore, the frame 2 can take on any shape and size compatible with the type of equipment, especially auxiliary equipment, present on handle applicator 1.

For example, the frame 2 can define a bridge structure.

In general, the frame 2 is suitable to be placed adjacent to transport means 11.

In this way, at least part of handle applicator 1 can interact with the packages transported along transport path 1a by the transport means.

In fact, the handle applicator 1 also includes an applicator **3.**

The applicator 3 is constrained in a compliant way to frame 2. This means that applicator 3 is connected to a part of frame 2 but can move relative to it.

The applicator 3 is, therefore, constrained to frame 2 in such a way that it can be suspended cantilevered, in use, on transport path 1a.

Of course, the term 'in use' refers to the handle applicator 1 when operated and interacting with the transport means 11 to assemble a handle with a respective packaging.

In particular, the applicator 3 includes at least a first shaft **30.**

The first shaft 30 is essentially an element defining an elongated shape, preferably cylindrical. Furthermore, preferably, the first shaft 30 is hollow.

Thus, the first shaft 30 is rotating with respect to frame 2 around a rotation axis **3a.** The rotation axis 3a is therefore capable of being arranged transversely to the transport path 1a.

The applicator 3 also preferably includes a support **31.**

Preferably, the support 31 is solidly constrained to the first shaft 30. Therefore, the support 31 rotates solidly with the first shaft 30 around the rotation axis 3a.

In particular, preferably the support 31 extends transversely to the first shaft 30. More specifically, support 31 can extend along a plane perpendicular to rotation axis 3a. Furthermore, the support 31 can define various configurations.

For example, the support 31 may include a straight bar.

Or, in the preferred form of embodiment, the support 31 can define different shapes, e.g. star-shaped, in the plane perpendicular or transverse to rotation axis 3a.

In general, the support 31 comprises a plurality of arms **31.** If the support 31 comprises a straight bar, then the arms 31 may be aligned and may define the ends of the bar. Alternatively, the arms 31 may be, in the preferred but not exclusive embodiment, at least three in number. In other alternative embodiments, they may be four or five.

In this case, the arms 310 preferably protrude radially with respect to the rotation axis 3a. Thus, the arms 310 protrude in a plane normal to the rotation axis 3a.

Furthermore, in detail, the arms 310 may be distributed around the rotation axis 3a in a uniform manner. Where the arms 310 are exactly three in number, they are preferably distributed such that an angle of 120° is defined between each pair of adjacent arms 310.

The applicator 3 additionally includes a plurality of **32** rods.

The rods 32 are also essentially elongated elements.

In addition, the rods 32 are constrained in a compliant way to the support 31. This means that the rods 32 can move relative to the support 31.

Further, for example, each rod 32 may be constrained in a compliant way at a respective end of an arm 310. in particular, the rods 32 may be three in number. Thus, the rods 32 may each be connected to an arm 310 and also distributed by defining angles of 120° between the junctions between each rod 32 and the rotation axis 3a.

Each rod 32, in even more detail, extends along its own extension axis **32a.**

The extension axis 32a may substantially correspond to a barycentric axis of the rod 32. In general, the extension axis 32a is an axis of prevailing development, i.e. along which the rod 32 defines the prevailing dimension.

The extension axis 32a is therefore preferably parallel to the rotation axis 3a.

In addition, the shafts 32 are preferably spaced with respect to the first shaft 30.

In addition, each rod 32 includes gripping means **320.**

The gripping means 320 are basically configured to engage a handle. The handle can essentially also consist of a simple strip of paper.

The gripping means 320 can be exercised in a variety of ways.

Preferably, the gripping means 320 comprise one or more suction cups. Therefore, in general, the gripping means 320 preferably work in a vacuum with respect to the handle.

Advantageously, the applicator 3 includes additional elements.

In particular, the applicator 3 also includes a second shaft **33.**

The second shaft 33 is substantially similar to the first shaft 30. Therefore, it defines an elongated shape, for example cylindrical. Preferably, the second shaft 33 is housed at least partially in the first shaft 30.

Thus, the second shaft 33 is rotating about the rotation axis 3a.

In particular, advantageously, the second shaft 33 is rotating independently of the first shaft 30 or, in other words, rotates or can rotate with respect to both frame 2 and the first shaft 30.

In addition, the applicator 3 also includes transmission means **34.** Advantageously, the transmission means 34 are operatively connected to the second shaft 33 and each of the rods 32. Thus, the transmission means 34 are configured to transmit a rotation of the second shaft 33 to each rod 32.

By transmitting the rotation, each shaft 32 can rotate about its extension axis 32a with respect to the support 31. Advantageously, the rotation of each rod 32 is proportional to the rotation of the second shaft 33.

In particular, to realise the above mechanism, the second shaft 33 may comprise a main crown **330.**

The main crown 330 is essentially a circumferential mechanical element capable of exerting a tangential tensile force on, or receiving a tangential pull from, an element in contact with it.

The main crown 330 is therefore, if present, preferably housed in holder 31.

Each rod 32, in turn, may include a secondary crown **321.**

If present, the secondary crown 321 is a similar element to the main crown 330.

Thus, the secondary crown 321 may also be a circumferential element capable of exerting a tangential tensile force on, or receiving a tangential tensile force from, an element in contact with it.

Preferably, the main crown 330 is the driving element, while the secondary crowns 321 are the driven elements.

The secondary crowns 321 are also preferably housed in the support 31.

The transmission means 34 may, therefore, include a belt **340.**

The belt 340 is the element contacting both the main chainring 330 and the secondary chainrings 321. The term belt 340 broadly refers to both a chain and a continuous element defining a closed path, e.g. elastomeric.

The belt 340, in general, defines a closed path in the support 31.

In addition, the belt 340 defines a path around the main crown 330 and each secondary crown 321. Thus, as it rotates, the main crown 330 transmits its motion to the secondary crowns 321 via the belt 340.

The means of transmission 34 may also include a plurality of rollers **341.**

If present, the rollers 341 are constrained in a compliant way to support 31. In particular, the rollers 341 are idly rotating about their own axes. Each axis is therefore parallel to the rotation axis 3a.

The belt 340, in addition, preferably passes along part of the closed path between the rollers 341 and the main crown 330. Thus, the rollers 341 are diverting or driving elements of the belt 340 and help to define its path with the crowns 330, 321.

The applicator 3 may include additional arrangements.

For example, advantageously, the second shaft 33 can be hollow.

Furthermore, the support 31 may define a hermetically closed chamber. By the term closed chamber, it is understood that the support 31 may substantially define a hermetically sealed tank to which, in the case of the first shaft 30, or in a compliant way, in the case of the rods 32 and second shaft 33, the various components are constrained.

Low-friction seals, e.g. made of Kevlar^{®}, can be used to ensure sealing between the various mutually moving components.

Thus, advantageously, each shaft 32 can also be hollow. In this way, the gripping means 320 are substantially in fluid passage connection with the second shaft 33. In particular, they are connected with the second shaft 33 as just described via their own rod 32 and support 31.

Thus, in a preferred form of realisation, advantageously, handle applicator 1 may include suction means **6.**

The suction means 6 are, if present, in fluid passage connection with the second shaft 33. Thus, the suction means 6 are preferably configured to realise vacuum, i.e. define a vacuum, in the gripping means 320. In detail, the suction means 6 are configured to realise this condition at least when the gripping means 32 contact a handle.

Thus, the suction means 6 allow the handle to be locked together with gripping means 320, if the latter cannot already do so independently or simply to further enhance the grip exerted by them.

Of course, the suction means 6 can also be configured, in use, to release each handle on the gripping means 11. This can be achieved by interrupting operation of the suction means or by applying pressure to the gripping means 320 to force the handles to release.

Preferably, of course, the handle applicator 1 also includes dispensing means **4.** Dispensing media 4 are basically configured to dispense handles. Therefore, dispensing media 4 include at least one dispensing station **40.**

The station 40 is essentially the end dispensing means of each handle. Thus, the dispensing means 4 also comprise a plurality of handles and are configured to dispense the handle, one by one, to the station 40. The station 40 may also comprise a simple surface on which the handle rests and, in general, may include any support means for stably supporting a handle.

The dispensing means 4 may also comprise a simple container, including handles, open at the bottom in such a way as to allow the handles to drop, one by one, onto the station 40. Or, the dispensing means 4 could also comprise handling means, such as a shuttle, capable of carrying each handle from a starting point, such as a container, to the station 40. In any event, similar means of dispensing 4 are known to the branch engineer and for example described in EP-A-3804973, incorporated herein by reference, at page 8 lines 4-19.

Furthermore, the station 40 is advantageously accessible by the gripping means 320. Thus, the gripping means 320 are configured to contact a handle at station 40 so that it can be dragged away from station 40 and then deposited on the transport means 11.

If the gripper 1 also comprises suction means 6, then they are preferably configured to create a vacuum in the gripping means 320, to lock the handle integral with said gripping means 320, at least when the gripping means 320 contact a handle in the station 40.

The handle applicator 1 may also include releasing means **5.**

The releasing means 5 are substantially configured to access the station 40. Thus, the releasing means 5 are configured to apply adhesive to each handle dispensed by the dispensing means 4, and then preferably positioned at station 40 awaiting collection by the applicator 3 via the gripping means 320.

The releasing means 5 may simply comprise sprayers suitable for placing glue on the handles and preferably spraying the same, in spray form, from the bottom upwards. Alternatively, the releasing means 5 may comprise a brush or other suitable spreading means for spreading adhesive on part of the handle.

Or, more specifically, the releasing means 5 may be of the type described in EP-A-3804973, incorporated herein by reference, p. 9 lines 2-21.

In conclusion, as a matter of course, handle applicator 1 can include control means **7.**

The control means 7, if any, are preferably connected to at least the first shaft 30 and the second shaft 33.

Thus, the control means 7 are preferably advantageously configured to rotate the second shaft 33 about the rotation axis 3a in proportion to the rotation of the first shaft 30 about the rotation axis 3a.

More specifically, advantageously, the control means 7 via the transmission means 34 rotate the second shaft 33 around the rotation axis 3a also differentially, i.e. at a different tangential speed, than the rotation of the first shaft 30 around the rotation axis 3a.

The operation of handle applicator 1 for the application of packaging handles described above in structural terms is as follows.

The handles, e.g. stretched paper strips, are dispensed from dispensing media 4 and then placed on station 40.

The releasing means 5 has adhesive on at least part of the handle in correspondence of the station 40.

Meanwhile, the first arm 30 of the applicator 3 rotates around the rotation axis 3a in such a way that periodically a single rod 32 passes at the station 40 and, simultaneously, the second arm 33 rotates so as to rotate the rods 32 in such a way that the gripping means 320 are correctly oriented towards the handle. When the gripping means 320 contact the handle, they lock it integrally to them. If suction means 6 are present, they create a vacuum, or more generally a depression, on the gripping means 320 so as to block the handle.

Continuing the rotation of the first shaft 30, and thus of the support 31 and the rods 32, about the rotation axis 3a, the handle clamped on the gripping means 320 is brought towards the transport means 11 and thus towards a packaging in transit. When the handle reaches the packaging, the gripping means 320, possibly with the aid of the suction means 6, release the handle which, turning the side with the adhesive towards the packaging, is deposited and glued onto the lying packaging. The latter can then be transported to the assembly means.

In addition, while a handle is placed on a package the gripping means 320 of another rod 32 pick up another handle dispensed from station 40.

The handle applicator 1 for applying handles to packaging according to the invention achieves important advantages.

In fact, the packaging handle applicator 1 is specifically designed for easy and convenient handling on any packaging transport line as it is equipped with all the necessary components for in-line operations.

In addition, the handle applicator 1 includes the applicator 3, which is structurally simple, quick and precise in the application of handles to moving packages and which, in particular, avoids losing control of the handles, especially but not only if the handle applicator 1 is equipped with suction means 6.

As a result, the handle applicator 1 allows an overall increase in the production efficiency of finished packaging while considerably reducing the possibility of defective finished packaging.

In conclusion, the handle applicator 1 allows a plurality of handles to be applied continuously while the applicator is being moved in relation to the conveyor line without interruption and with a high frequency compared to devices of known technology.

The invention is susceptible to variations within the inventive concept as defined by the claims.

Here, all details can be replaced by equivalent elements and the materials, shapes and sizes can be any.

## Claims

1. Handle applicator (1) for applying handles to packages comprising:
- a frame (2) adapted to be arranged adjacent to transport means (11) configured to convey in sequence packages (12) along a transport path (1a),
- an applicator (3) constrained in a compliant way to said frame (2) in such a way as to be able to be cantilevered, in use, on said transport path (1a) and including:
- a first hollow shaft (30) rotating with respect to said frame (2) around a rotation axis (3a) adapted to be arranged transversely to said transport path (1a),
- a support (31) rigidly constrained to said first shaft (30) and extending transversely to said first shaft (30),
- a plurality of rods (32) constrained in a compliant way to said support (31), each extending along its own extension axis (32a) parallel to said rotation axis (3a) spaced apart from said first shaft (30) and each comprising gripping means (320) designed to hook a handle,
- dispensing means (4) including at least one dispensing station (40) accessible from said gripping means (320) and a plurality of said handles and configured to dispense said handles one by one on said station (40),
- releasing means (5) configured to access said station (40) and to apply glue on each of said dispensed handles,
and **characterized by** that said applicator (3) further comprises:
- a second shaft (33) housed at least in part within said first shaft (30) and rotating around said rotation axis (3a) independently of said first shaft (30), and
- transmission means (34) operatively connected to said second shaft (33) and to each of said rods (32) and configured to transmit a rotation of said second shaft (33) to each said rod (32) so that each said rod (32) rotates around said own extension axis (32a) with respect to said support (31) proportionally to said rotation of said second shaft (33).

2. Handle applicator (1) according to claim 1, wherein said second shaft (33) is hollow, said support (31) defines a hermetically closed chamber and each of said rods (32) is hollow in such a way that said gripping means (320) are in fluid passage connection with said second shaft (33) through said support (31) and said rod (32).

3. Handle applicator (1) according to any one of the preceding claims, wherein said gripping means (320) comprise one or more suction cups.

4. Handle applicator (1) according to any one of claims 2-3, comprising sucking means (6) in fluid passage connection with said second shaft (33) and configured to create a vacuum in said gripping means (320) at least when said gripping means (320) contact a said handle in said station (40) so as to lock said handle integrally with said gripping means (320).

5. Handle applicator (1) according to the preceding claim, in which said suction means (6) are also configured, in use, to release each said handle onto said transport means (11).

6. Handle applicator (1) according to the preceding claim, wherein said second shaft (33) comprises a main crown (330) housed in said support (31), each said rod (32) comprises a secondary crown (321) housed in said support (31) and said transmission means (34) comprise a belt (340) defining a closed path in said support (31) around said main crown (330) and each of said secondary crowns (321).

7. Handle applicator (1) according to the preceding claim, wherein said transmission means (34) comprise a plurality of rollers (341) constrained in a compliant way to said support (31) around said main crown (330) and idly rotating around their own axes parallel to said rotation axis (3a) and said belt (340) passes along part of said closed path between said rollers (341) and said main crown (330).

8. Handle applicator (1) according to the preceding claim, wherein said support (31) comprises at least three arms (310) protruding radially with respect to said rotation axis (3a) in a plane normal to said rotation axis (3a), and in which said rods (32) are three in number and each constrained in a compliant way at a respective end of said arm (310).

9. Handle applicator (1) according to the preceding claim, wherein said arms (310) are distributed around said rotation axis (3a) in a uniform manner by defining angles of 120° between each pair of said arms (310) adjacent.

10. Handle applicator (1) according to the preceding claim comprising control means (7) operatively connected at least to said first shaft (30) and said second shaft (33) and configured to rotate said second shaft (33) around said rotation axis (3a) proportionally and differentially to said rotation of said first shaft (30) about said rotation axis (3a).
